# FASCICULE DE BREVET EUROPEEN

(11) **EP 0 503 987 B1**
(45) Date de publication et mention de la délivrance du brevet: **16.08.1995**
(21) Numéro de dépôt: 92400346.0
(22) Date de dépôt: 11.02.1992
(51) Int. Cl.: B60H 1/24

(54) **Procédé et dispositif de chauffage de ventilation, et de climatisation localisé d'un habitacle de véhicule automobile**
Verfahren und Vorrichtung für Heizung, Lüftung und Klimaanlage für Motorfahrzeuginnenraum
Method and apparatus for heating, ventilating and air-conditioning of the passenger compartment of a motor vehicle

(30) Priorité: 14.02.1991 FR 9101725
(43) Date de publication de la demande: 16.09.1992
(73) Titulaire: REGIE NATIONALE DES USINES RENAULT S.A., 92109 Boulogne Billancourt Cédex (FR)
(72) Inventeur: Dutot, Christian, F-78120 Emance (FR); Pastourel, Dominique, F-91790 Boissy S/St Yon (FR); Cherier, Gérard, F-92360 Meudon la Foret (FR)
(74) Mandataire: Ernst-Schonberg, Michel

(56) Documents cités:
- WO-A-84/00520
- WO-A-88/08374
- FR-A- 1 024 112
- FR-A- 2 413 249
- US-A- 2 295 750
- US-A- 3 329 077

## Description

L'invention concerne un procédé et dispositif de chauffage de ventilation, et de climatisation localisé d'un habitacle de véhicule automobile utilisant des supports creux constitutifs d'un châssis, dans lequel l'air de chauffage ou de refroidissement est dirigé par des conduits et des éléments de structure du véhicule vers des ouvertures de répartition.

La publication FR-A 1 024 112 décrit un système de chauffage dans lequel l'air frais provenant de l'extérieur est refoulé au travers d'un échangeur dans des longerons disposés sous le plancher du véhicule.

La publication US-A 2 295 750 décrit un système de chauffage comportant un générateur d'air mis en communication par un canal de distribution, avec un conduit d'amenée d'air jusqu'au pavillon dans lequel est intégrée une chambre de diffusion de l'air réchauffé dans l'habitacle.

Le problème non résolu par ces systèmes est consécutif au fait que les moyens de diffusion d'air sont situés sur le trajet de la distribution, si bien que la répartition de l'air dans l'habitacle ne correspond pas aux conditions de confort des passagers du véhicule.

L'invention part de l'idée que le confort thermique des occupants d'un habitacle de véhicule peut-être obtenu en établissant dans cet habitacle des zones incluant par exemple une zone basse comprise entre 18 et 22° et une zone haute admettant une température plus réduite.

Conformément à l'invention, le problème est résolu en ce que le flux d'entrée de l'air dans l'habitacle est dérivé en :
- un premier flux d'air de refroidissement qui débouche au niveau du plancher à proximité d'un siège d'occupant du véhicule,
- un deuxième flux d'air de refroidissement qui débouche au dessus de la tête du dit occupant,
- et que les dits premier et deuxième flux se mélangent en un flux d'air de climatisation à zones étagées de température sensiblement différentes qui débouche notamment au niveau des pieds des passagers du véhicule afin de créer une enveloppe d'air frais autour de chaque occupant, aspirée latéralement au contact d'une paroi de l'habitacle.

Selon une autre caractéristique du procédé, l'air aspiré latéralement au contact d'une paroi de l'habitacle est réchauffé et recyclé dans le flux d'air de chauffage.

Selon une caractéristique du procédé, l'air aspiré latéralement au contact d'une paroi de l'habitacle est partiellement dérivé vers une zone d'application telle qu'un compartiment de réfrigération de boissons.

Selon une autre caractéristique du procédé, un moyen afficheur de température délivre un premier signal d'entrée à un comparateur et ce dernier reçoit un deuxième signal d'entrée représentatif de la température de l'habitacle pour élaborer un signal de sortie de commande des composants du dispositif de chauffage, de ventilation et de climatisation pendant une période de mise en concordance de la température de l'habitacle avec la température affichée.

Selon une caractéristique du dispositif de chauffage des capteurs de la température de l'habitacle sont placés sur les sièges à la hauteur des hanches et de la nuque des occupants du véhicule. La combinaison de l'information obtenue par ces capteurs avec une information éventuellement fournie par des capteurs situés sur les parois intérieures droite et gauche du véhicule, permet également de tenir compte de l'incidence solaire (ensoleillement latéral droit ou gauche, avant ou arrière) et d'en corriger les effets.

Selon une autre caractéristique du dispositif le premier flux d'air débouche dans l'habitacle entre les sièges dans le plan longitudinal médian du véhicule au travers de modules pilotés par le signal de sortie du comparateur.

D'autres caractéristiques et avantages de l'invention apparaîtront à la lecture de la description qui suit faite en référence au dessin annexé dans lequel:
- La figure 1 est une représentation schématique en élévation du véhicule avec arrachement de l'un des côtés de la carrosserie,
- La figure 2 est une représentation schématique en coupe transversale du véhicule selon la ligne II-II de la figure 1,

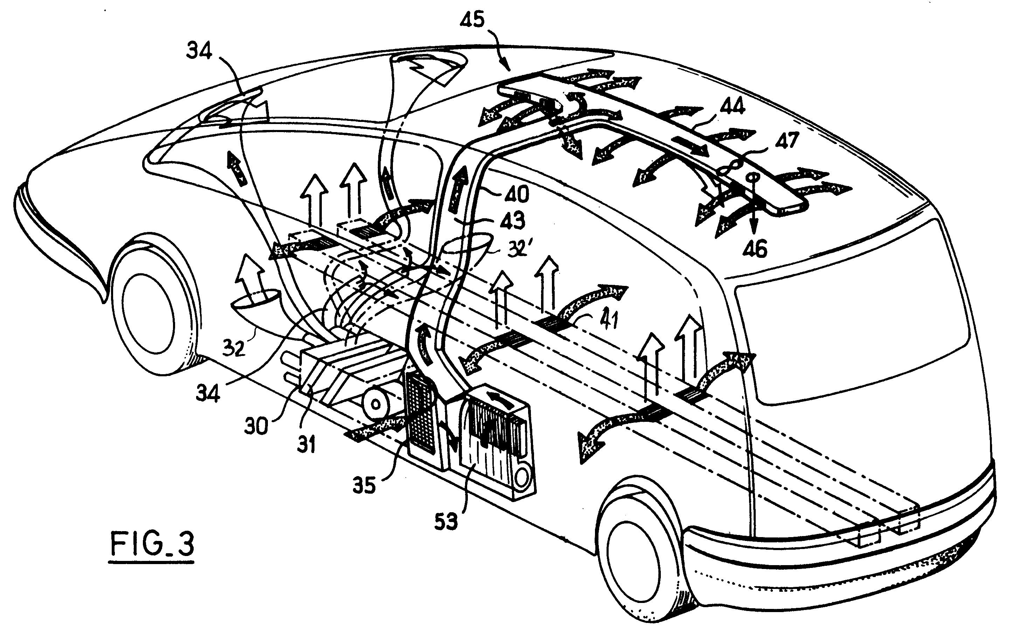

- La figure 3 est une vue en perspective de la répartition des flux d'air de chauffage et de refroidissement dans l'habitacle du véhicule.

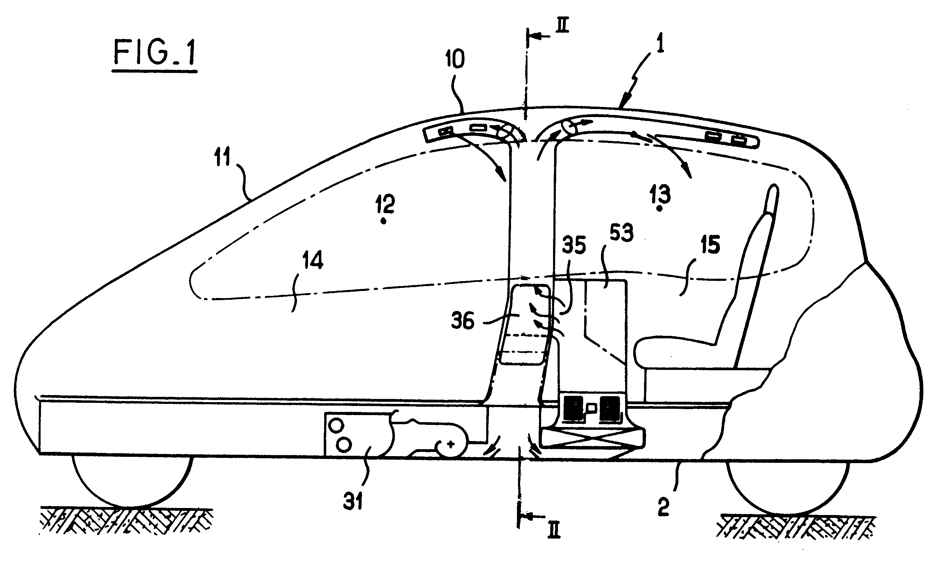

La figure 1 décrit une vue en coupe longitudinale d'un véhicule équipé du dispositif conforme à l'invention.

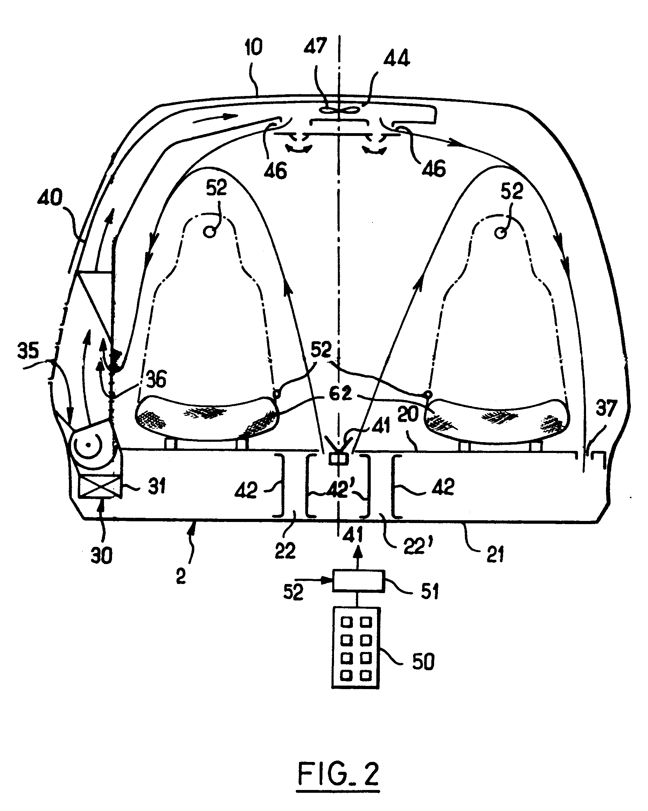

Le véhicule est constitué par une carrosserie 1 supportée par un chassis plancher 2 représenté plus en détail à la figure 2. La carrosserie possède essentiellement un pavillon 10, un pare-brise 11, des ouvertures latérales 12, 13 recevant des portes vitrées 14, 15. Le chassis plancher 2 supporte un plancher supérieur 20 et un plancher inférieur 21 qui réalisent conjointement un caisson. Les planchers 20, 21 sont séparés par des longerons réalisés sous la forme de canalisation 22, 22′ formés respectivement par deux parois verticales 42, 42′ disposées entre les planchers 20, 21. Les longerons 22, 22′ sont de la sorte formés par des corps creux qui débouchent à l'arrière du véhicule et reçoivent avantageusement des ajutages dans le but d'augmenter la vitesse de circulation d'air dans les longerons comme il sera expliqué ci-après.

Les longerons 22, 22′ se prolongent vers l'avant par des poutres support du groupe moto-propulseur non représenté en partie entretoisées par la tôle de plancher inférieur 21. Celle-ci supporte conjointement avec des poutres support un ensemble de réchauffage 30 de l'air destiné au chauffage de l'habitacle formé par un aérotherme 31 qui débite dans les longerons 22, 22′ sur le quel sont branchés deux canaux distributeurs d'air 32, 32′ dont le flux d'air balaie par exemple les pieds des passagers occupant les places avant.

L'aérotherme 31 débite ainsi dans les canaux distributeurs de l'air de chauffage 32, 32′ sur lesquels peuvent être branchées les dérivations complémentaires 34 d'alimentation en air chaud de la base du pare-brise.

Selon l'invention, on prévoit de séparer les sources d'air chaud, représentée par l'aérotherme 31 et d'air froid, constituée par une entrée d'air latérale 35 réalisée dans une paroi extérieure de la carrosserie portée par un montant 40 du pavillon 10.

L'aérotherme 31 est monté entre les planchers 20, 21 de manière à occuper un minimum de place en combinaison avec les modules 41 de distribution localisée de l'air frais dans l'habitacle notamment au niveau des pieds des passagers du véhicule. Les modules tels que 41 assurent l'isolation des occupants des sièges 62 des courants d'air parasites au moyen d'enveloppes d'air frais aspirées latéralement par des ouvertures 36, 37 au contact d'une paroi de l'habitacle et du plancher supérieur 20. L'ensemble des modules tels que 41 associés au besoin avec d'autres modules de distribution d'air dont le flux débouche au niveau de la tête de chaque passager permet de réaliser un flux d'air de climatisation à zones étagées de température sensiblement différentes qui débouche de la sorte au niveau des pieds et au besoin de la tête de chaque passager. Le premier flux d'air de chauffage ou de refroidissement débouche, selon l'exemple de réalisation représenté, dans l'habitacle, entre les sièges et dans la zone médiane du véhicule.

L'air frais aspiré latéralement par l'ouverture 36 est dérivé avantageusement en amont de l'aérotherme 31 pour refroidir un compartiment de réfrigération 53.

L'entrée d'air 35 débouche dans un conduit 43 du montant 40 du pavillon. Le montant constitue également un demi-arceau qui débouche dans une poutre médiane longitudinale 44 et constitue une structure rigide de la carrosserie.

L'air frais peut être aussi conduit au besoin à partir d'une entrée frontale supplémentaire de pavillon 45 située dans une zone en pression au sommet du pare-brise au travers d'une grille basculante et circule dans la poutre 44 pour être distribué dans l'habitacle par des ouvertures de pavillon 46 et infléchir latéralement vers le bas le premier flux d'air frais introduit par les modules 41.

Par ailleurs, cet air frais favorise la circulation de l'air autour des passagers dont l'intensité et le volume peuvent être régulés par l'intermédiaire d'un ventilateur additionnel 47 placé dans la poutre 44 mis en action en fonction des besoins, du taux de gaz internes et du taux d'hygrométrie détectés par un ensemble de sondes de régulation.

Ainsi que cela a été représenté schématiquement à la figure 2 un afficheur 50 de la température désirée délivre un signal de référence d'entrée à un comparateur 51. Ce dernier reçoit un second signal représentatif de la température de l'habitacle délivré notamment par les sondes 52 des sièges 62. Après comparaison des signaux d'entrée, un signal de sortie est élaboré pour la commande des micromoteurs des modules tels que 41 pendant une période de mise en concordance de la température de l'habitacle avec la température affichée.

## Revendications

1. Procédé de chauffage, de ventilation et de climatisation localisé d'un habitacle de véhicule automobile utilisant des supports creux constitutifs d'un chassis, dans lequel l'air de chauffage ou de refroidissement est dirigé par des conduits et des éléments de structure du véhicule vers des ouvertures de répartition, caractérisé par le fait que le flux d'entrée de l'air dans l'habitacle est dérivé en :
- un premier flux d'air de chauffage ou de refroidissement qui débouche au niveau du plancher à proximité d'un siège d'occupant du véhicule,
- un deuxième flux d'air de refroidissement qui débouche au-dessus de la tête dudit occupant,
et que les dits premier et deuxième flux se mélangent en un flux d'air de climatisation à zones étagées notamment de température sensiblement différentes qui débouche au niveau des pieds des passagers du véhicule.

2. Procédé selon la revendication 1, caractérisé par le fait que l'air aspiré latéralement au contact d'une paroi de l'habitacle est recyclé dans le flux d'air de chauffage.

3. Procédé selon la revendication 2, caractérisé par le fait que l'air aspiré latéralement au contact d'une paroi de l'habitacle est partiellement dérivé vers une zone de diffusion.

4. Procédé selon l'une quelconque des revendications 1 à 3, caractérisé par le fait qu'un moyen afficheur de température délivre un premier signal d'entrée à un comparateur et que ce dernier reçoit un deuxième signal représentatif de la température de l'habitacle pour élaborer un signal de sortie de commande des composants du dispositif de chauffage, de ventilation et de climatisation pendant une période de mise en concordance de la température de l'habitacle avec la température affichée.

5. Dispositif de chauffage, de ventilation et de climatisation faisant application du procédé selon l'une quelconque des revendications 1 à 4, caractérisé par le fait que le premier flux d'air débouche dans l'habitacle entre deux sièges dans la zone médiane du véhicule au travers des modules (41) pilotés par le signal de sortie du comparateur (50).

6. Dispositif selon la revendication 5, caractérisé par le fait que les sièges du véhicule portent des sondes (52) de température de l'habitacle.

## Claims

1. A process for the localised heating, ventilating and air-conditioning of a motor vehicle passenger compartment using hollow supports which constitute a chassis, in which the heating or cooling air is directed by conduits and structural elements of the vehicle towards distribution openings, characterised in that the intake flow of air into the passenger compartment is diverted as:
- a first heating or cooling air flow which issues at the level of the floor in the vicinity of a seat for an occupant of the vehicle, and
- a second cooling air flow which issues above the head of said occupant, and that said first and second flows mix as an air-conditioning air flow involving substantially different zones which are staged in particular in respect of temperature, which issues at the level of the feet of the passengers of the vehicle.

2. A process according to claim 1 characterised in that the air which is drawn in laterally in contact with a wall of the passenger compartment is recycled into the heating air flow.

3. A process according to claim 2 characterised in that the air which is drawn in laterally in contact with a wall of the passenger compartment is partially diverted towards a diffusion zone.

4. A process according to any one of claims 1 to 3 characterised in that a temperature display means supplies a first input signal to a comparator and that the latter receives a second signal which is representative of the temperature of the passenger compartment to produce an output signal for control of the components of the heating, ventilating and air-conditioning apparatus during a period involving bringing the temperature of the passenger compartment into conformity with the displayed temperature.

5. A heating, ventilating and air-conditioning apparatus for carrying out the process according to any one of claims 1 to 4 characterised in that the first air flow issues into the passenger compartment between two seats in the central zone of the vehicle through modules (41) which are pilot-controlled by the output signal of the comparator (50).

6. Apparatus according to claim 5 characterised in that the seats of the vehicle bear probes (52) for sensing the temperature of the passenger compartment.

## Patentansprüche

1. Verfahren zur Heizung, Lüftung und örtlichen Klimatisierung eines Fahrgastraumes eines Kraftfahrzeuges unter Verwendung von hohlen Chassisträgern, wobei die Heiz- oder Kühlluft mittels Kanälen und Bauteilen des Fahrzeugs zu Verteilöffnungen geleitet wird, dadurch gekennzeichnet, daß der dem Fahrgastraum zugeführte Luftstrom unterteilt wird in:
- einen ersten Heiz- oder Kühlluftstrom, der auf Höhe des Bodens in der Nähe eines Sitzes für den Fahrgast mündet,
- einen zweiten Kühlluftstrom, der oberhalb des Kopfes dieses Fahrgastes mündet,
und daß sich diese beiden Ströme zu einem Klimatisierungsluftstrom vermischen, in abgestuften Bereichen mit im wesentlichen unterschiedlicher Temperatur, welcher auf Höhe der Füße der Fahrgäste mündet.

2. Verfahren nach Anspruch 1, dadurch gekennzeichnet, daß die seitlich aus der Wand des Fahrgastraumes angesaugte Luft in den Heizluftstrom rückgeführt wird.

3. Verfahren nach Anspruch 2, dadurch gekennzeichnet, daß die seitlich aus der Wand des Fahrgastraums angesaugte Luft teilweise in einen Verteilbereich abgelenkt wird.

4. Verfahren nach einem der Ansprüche 1 bis 3, dadurch gekennzeichnet, daß eine Temperaturanzeigeanordnung ein erstes Eintrittssignal für einen Vergleicher liefert und daß letzterer ein zweites Signal erhalt als Funktion der Temperatur des Fahrgastraumes zur Erstellung eines Ausgangssignals für die Steuerung von Bauteilen der Heiz-, Kühl- und Klimatisierungsanordnung während eines Zeitraums, um die Temperatur des Fahrgastraumes mit der angezeigten Temperatur in Übereinstimmung zu bringen.

5. Vorrichtung zur Heizung, Kühlung und Klimatisierung unter Verwendung des Verfahrens nach einem der Ansprüche 1 bis 4, dadurch gekennzeichnet, daß der erste Luftstrom im Fahrgastraum zwischen zwei Sitzen in einem Kraftfahrzeugmittenbereich durch Verteiler hindurch mündet, welche vom Ausgangssignal des Vergleichers (50) gesteuert werden.

6. Vorrichtung nach Anspruch 5, dadurch gekennzeichnet, daß die Fahrzeugsitze mit Sonden (52) für die Fahrgastraumtemperatur versehen sind.
